Europäisches Patentamt

European Patent Office

Office européen des brevets

(19)

(11) Veröffentlichungsnummer: **0 450 407 A2**

# (12) EUROPÄISCHE PATENTANMELDUNG

(21) Anmeldenummer: 91104371.9

(22) Anmeldetag: 20.03.91

(51) Int. Cl.⁵: **B27B 27/04**

(30) Priorität: 31.03.90 DE 9003773 U

(43) Veröffentlichungstag der Anmeldung:
09.10.91 Patentblatt 91/41

(84) Benannte Vertragsstaaten:
**AT BE CH DE DK ES FR GB GR IT LI LU NL SE**

(71) Anmelder: **Elektra-Beckum Lubitz & Co.**
**Daimlerstrasse 1**
**W-4470 Meppen 1(DE)**

(72) Erfinder: **Hempelmann, Gerd**

**Sandstrasse 11**
**W-4470 Meppen 1(DE)**
Erfinder: **Hempelmann, Jürgen**
**Sandstrasse 11**
**W-4470 Meppen 1(DE)**

(74) Vertreter: **von Rohr, Hans Wilhelm, Dipl.-Phys.**
**et al**
**Patentanwälte Gesthuysen & von Rohr**
**Huyssenallee 15 Postfach 10 13 33**
**W-4300 Essen 1(DE)**

(54) **Sägeeinrichtung.**

(57) Eine Sägeeinrichtung mit einem Traggestell (1) mit einer eine Werkstückauflagefläche bildenden Grundplatte (2) und einem an der Grundplatte (2) angeordneten Sägeaggregat (3), wobei das Sägeaggregat (3) einen Antriebsmotor (4) und ein auf einer Welle (5) gelagertes, vom Antriebsmotor (4) angetriebenes Sägeblatt (6) aufweist und gegenüber der Grundplatte (2) zumindest um eine parallel zur Welle (5) des Sägeblattes (6) verlaufende Schwenkachse (7) schwenkbar ist, wobei die Grundplatte (2) einen Eintauchschlitz für das Sägeblatt (6) aufweist, wobei nahe der Schwenkachse (7) eine quer über die Grundplatte (2) verlaufende Werkstückanschlagschiene mit einer Unterbrechung im Bereich des Eintauchschlitzes an der Grundplatte (2) angebracht ist und wobei vor der Werkstückanschlagschiene eine weitere Anschlagschiene liegt, wird hinsichtlich des Werkstückanschlags optimiert, indem die weitere Anschlagschiene mit mindestens einer Befestigungsklammer versehen ist, mit der sie auf die Werkstückanschlagschiene aufgesteckt bzw. an die Werkstückanschlagschiene angesteckt ist.

Fig.1

EP 0 450 407 A2

Die Erfindung betrifft eine Sägeeinrichtung nach dem Oberbegriff von Anspruch 1.

Sägeeinrichtungen der in Rede stehenden Art sind seit längerem bekannt, man bezeichnet sie zumeist als Kapp- und Gehrungssägen. Eine aus der Praxis bekannte Kapp-, Gehrungs- und Tischkreissäge (Prospekt ELU TGS - TGS 171, 172 1983) weist einen in der Grundplatte eingelassenen, in der Grundplatte drehbaren Rundtisch auf, an dem das Sägeaggregat randseitig angebracht ist. Das Sägeaggregat ist gegenüber diesem Rundtisch und damit gegenüber der Grundplatte um die parallel zur Welle des Sägeblattes verlaufende Schwenkachse schwenkbar, so daß Kappschnitte ausgeführt werden können. Dieses Sägeaggregat ist aber auch um eine weitere, von einer Schwenkkulisse gebildete Schwenkachse schwenkbar, die in der Ebene der Grundplatte in Richtung des Eintauchschlitzes verläuft. Dadurch können gleichzeitig Kapp- und Gehrungsschnitte in der Vertikalen ausgeführt werden. Durch den drehbaren Rundtisch ist es darüber hinaus möglich, gleichzeitig auch noch Gehrungsschnitte in der Horizontalen auszuführen, letztlich sind das dann sogenannte Shifterschnitte.

Unabhängig davon, ob bei Sägeeinrichtungen der in Rede stehenden Art ein oder zwei Schwenkachsen vorhanden sind, und ob ein in der Grundplatte drehbar eingelassener Rundtisch vorgesehen ist oder nicht, ist jedenfalls eine an der Grundplatte ortsfeste Werkstückanschlagschiene so nahe wie möglich an der parallel zur Welle des Sägeblattes verlaufenden Schwenkachse angeordnet. Diese Werkstückanschlagschiene bildet den rückwärtigen Anschlag für ein anzulegendes Werkstück. Um dünne Paneele od. dgl. mit möglichst großer Schnittlänge schneiden zu können, sollte die Werkstückanschlagschiene soweit wie möglich in Richtung der Schwenkachse angeordnet sein. Die Schnittiefe ist dann aber an der Werkstückanschlagschiene selbst nicht besonders groß. Will man dickere Kanthölzer schneiden, so muß man das mit etwas Abstand von der Werkstückanschlagschiene tun, um in den Mittelbereich des Sägeblattes zu gelangen. Dazu ist es bei der bekannten Sägeeinrichtung bekannt, eine als Beilage bezeichnete lose Anschlagschiene aus Holz vor die eigentliche ortsfeste Werkstückanschlagschiene zu legen. Diese aus Holz bestehende, durchgehende Anschlagschiene wird beim Kappen von Kantholz oder Profilen zum Teil mit durchtrennt.

Da das zuvor erläuterte System nicht immer als befriedigend empfunden worden ist, ist auch schon eine Alternative vorgeschlagen worden, bei der die Werkstückanschlagschiene als solche weiter weg von der Schwenkachse angeordnet ist, jedoch eine über die gesamte Anschlaglänge durchgehende Werkstückaufnahmenut aufweist, deren Tiefe ausreicht, um eine Kante von dünnen brettförmigen Werkstücken, also auch von Paneelen od. dgl., zu halten. Dadurch werden dünne Werkstücke angehoben und können trotz der vorverlagerten Werkstückanschlagschiene auf großer Länge durchtrennt werden (DE-C 3 109 605 sowie ELU-Prospekt a.a.0.) Dies erfordert eine besondere konstruktive Gestaltung der Werkstückanschlagschiene und begrenzt die Dicke der zu verarbeitenden Paneele auf die Breite der Werkstückaufnahmenut. Das ist nicht immer optimal.

Insgesamt liegt der Erfindung die Aufgabe zugrunde, eine hinsichtlich des Werkstückanschlags optimierte Sägeeinrichtung anzugeben.

Die zuvor aufgezeigte Aufgabe ist bei einer Sägeeinrichtung mit den Merkmalen des Oberbegriffs von Anspruch 1 durch die Merkmale des kennzeichnenden Teils von Anspruch 1 gelöst.

Erfindungsgemäß bleibt es bei der zusätzlichen, vor die ortsfeste Werkstückanschlagschiene gesetzten Anschlagschiene. Diese wird aber nicht lose angelegt, sie wird auch nicht angeschraubt, sie wird vielmehr hinreichend fest mit der Werkstückanschlagschiene dadurch verbunden, daß sie mit mindestens einer Befestigungsklammer auf die Werkstückanschlagschiene aufgesteckt bzw. an diese angesteckt ist. Dies gewährleistet, daß die Anschlagschiene, die nun ohne weiteres werkseitig mitgeliefert werden kann und auch nicht aus Holz bestehen muß, genau dort liegt, wo sie sein soll, nämlich seitlich des Eintauchschlitzes. Sie sollte also den Eintauchschlitz und die Unterbrechung frei lassen. Dadurch wird verhindert, daß das Sägeblatt beim Kappen von Kantholz od. dgl. in die Anschlagschiene eindringt, diese befindet sich ja nicht dort, wo das Sägeblatt die Schnittfuge setzt.

Grundsätzlich wäre es natürlich denkbar, die Anschlagschiene auch an die Werkstückanschlagschiene anzuschrauben, das ist aber für einen Wechsel des Schnittgutes viel zu aufwendig. Das Aufstecken auf die Werkstückanschlagschiene bzw. das Anstecken an die Werkstückanschlagschiene ist hingegen selbst viel einfacher und erlaubt überdies auch noch, daß die Anschlagschienen gegenüber der Werkstückanschlagschiene seitlich verschiebbar sind.

Das Aufstecken der Anschlagschiene auf die Werkstückanschlagschiene bzw. das Anstecken an diese kann allerdings durchaus auch unter Einfluß von Schnellspanneinrichtungen, beispielsweise Exzenter-Spanneinrichtungen erfolgen. Das macht gegenüber einer rein unter Federkraft klemmend aufgesteckten Anschlagschiene handhabungstechnisch kaum einen Unterschied.

Vorteilhaft ist, daß die erfindungsgemäß an der Werkstückanschlagschiene fest angebrachte, also nicht nur lose angelegte Anschlagschiene an dem der Unterbrechung zugewandten Ende entsprechend dem Gehrungsschnittbereich abgeschrägt ist. Bei der Möglichkeit von Shifterschnitten muß eine entsprechende Abschrägung in zweifacher Richtung vorgesehen sein, also nach beiden Seiten der Unterbrechung.

Insgesamt gilt, daß bei der erfindungsgemäßen Lösung die Anschlagschiene ohne weiteres aus Aluminium bestehen kann, da sie bei sachgemäßer Handhabung niemals mit dem Sägeblatt in Berührung kommen kann.

Bislang ist nur von einer Anschlagschiene die Rede gewesen bzw. im Anspruch 1 von mindestens einer Anschlagschiene. Zweckmäßig ist es natürlich zwecks symmetrischer Ausbildung eines Anschlages, daß beidseits des Eintauchschlitzes und der Unterbrechung die weitere Anschlagschiene vorhanden ist. Insoweit empfiehlt es sich dann also, daß auf jeder Seite der Unterbrechung eine separate Anschlagschiene vorgesehen ist, insgesamt also zwei weitere Anschlagschienen vorgesehen sind. Dadurch ist die aus dem Stand der Technik bekannte, durchgehende Anschlagschiene in an die Bedürfnisse der Sägeeinrichtung der in Rede stehenden Art angepaßter Weise modifiziert worden. Sie ist nämlich mittig geteilt, durch die beiden Anschlagschienen bleibt der Bereich des Eintauchschlitzes und der Unterbrechung zwanglos frei. Dies ist von besonderer Bedeutung in Verbindung mit der Lehre von Anspruch 1.

Die erfindungsgemäß verwirklichte seitliche Verschiebbarkeit der Anschlagschienen gegenüber der Werkstückanschlagschiene trotz daran befestigter Anschlagschienen gewinnt eine besondere Bedeutung bei Sägeeinrichtungen mit um 180° wendbarer Grundplatte, also Sägeeinrichtungen, die nicht nur als Kapp- und Gehrungssäge, sondern auch als Tischkreissäge eingesetzt werden können. Die Weite des Eintauchschlitzes ist dann nämlich in Tischsägeposition unter Umständen anders als in Kappsägeposition, dieser Situation kann aber durch seitliche Verstellung der Anschlagschienen leicht Rechnung getragen werden.

Bevorzugte Ausgestaltungen und Weiterbildungen der Lehre sind nun auch aus der nachfolgenden Erläuterung eines bevorzugten Ausführungsbeispiels anhand der Zeichnung entnehmbar. In der Zeichnung zeigt

Fig. 1    in einer Seitenansicht, schematisch, ein Ausführungsbeispiel einer erfindungsgemäßen Sägeeinrichtung und

Fig. 2    in perspektivischer Ansicht, ausschnittweise und vergrößert, den Bereich der Werkstückanschlagschiene der Sägeeinrichtung aus Fig. 1.

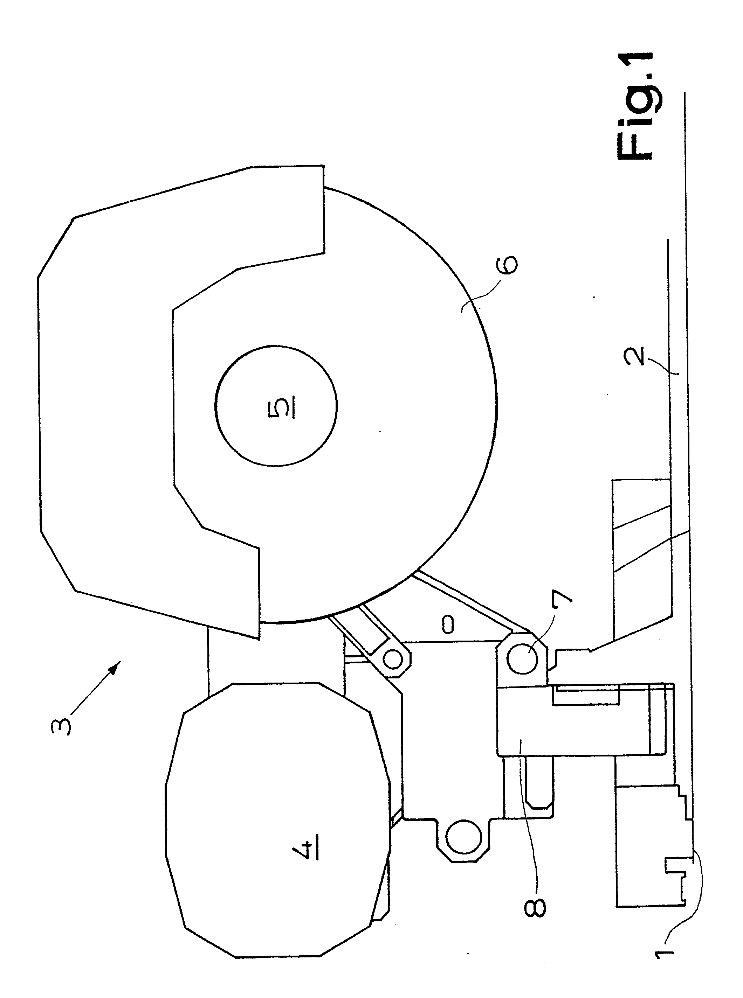

Die in Fig. 1 dargestellte Sägeeinrichtung ist eine kombinierte Kapp-, Gehrungs- und Tischkreissäge mit einem Traggestell 1 mit einer eine Werkstückauflagefläche bildende Grundplatte 2 und einem an der Grundplatte 2 angeordneten Sägeaggregat 3. Die dargestellte Sägeeinrichtung weist überdies eine um 180° wendbare Grundplatte 2 auf, in der gegenüber Fig. 1 gewendeten Stellung ist die Sägeeinrichtung als Tischkreissäge einsetzbar.

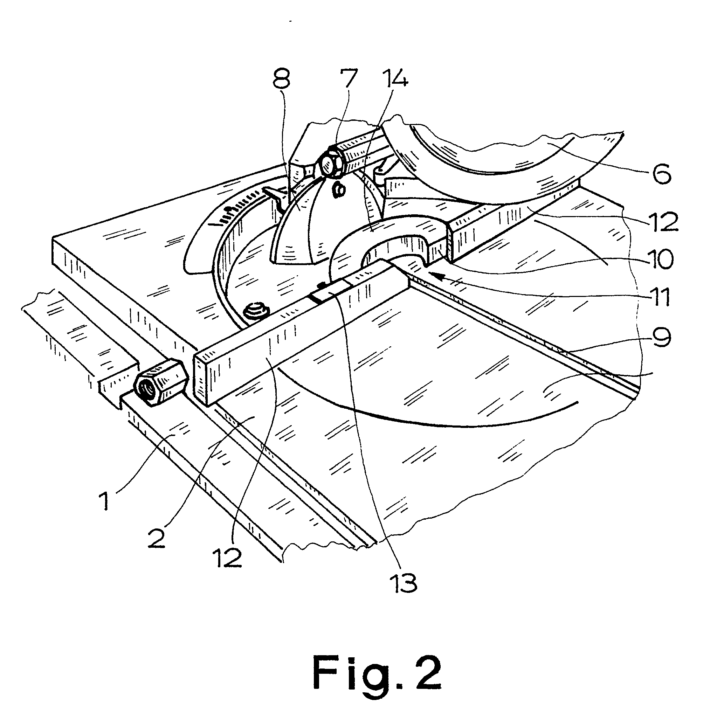

Das Sägeaggregat 3 der dargestellten Sägeeinrichtung weist einen elektrischen Antriebsmotor und ein auf einer Welle 5 gelagertes, vom Antriebsmotor 4 angetriebenes Sägeblatt 6 auf. Das Sägeaggregat 3 ist gegenüber der Grundplatte 2 zunächst um eine parallel zur Welle 5 des Sägeblattes 6 verlaufende Schwenkachse 7 schwenkbar. Das ist in Fig. 1 ebenso wie in Fig. 2 gut zu erkennen. Überdies ist dieses Sägeaggregat 3 gegenüber der Grundplatte 2 auch noch um eine weitere Schwenkachse schwenkbar, die in der Ebene der Grundplatte 2 liegt und parallel zum Sägeblatt 6 in dessen Ebene verläuft. Diese wird durch eine Schwenkkulisse 8 gebildet. Ergänzend darf auf den allgemeinen Teil der Beschreibung verwiesen werden.

Die Grundplatte 2 weist einen Eintauchschlitz 9 für das Sägeblatt 5 auf, was in Fig. 2 gut zu erkennen ist. Dabei ist hier auch noch dargestellt, daß in der Grundplatte 2 ein drehbarer Rundtisch eingelassen ist, so daß Gehrungsschnitte ausgeführt werden können.

Nahe der Schwenkachse 7 verläuft quer über die Grundplatte 2 eine Werkstückanschlagschiene 10 mit einer Unterbrechung 11 im Bereich des Eintauchschlitzes 9. Die Werkstückanschlagschiene 10 ist an der Grundplatte 2 angebracht. Der hier dargestellte Rundtisch dreht unter der Werkstückanschlagschiene 10.

Vor der Werkstückanschlagschiene 10 liegt eine weitere Anschlagschiene 12. Die Funktion der weiteren Anschlagschiene 12 vor der Werkstückanschlagschiene 10 ist im allgemeinen Teil der Beschreibung erläutert worden, so daß darauf verwiesen werden darf.

Im dargestellten Ausführungsbeispiel ist auf jeder Seite der Unterbrechung 11 eine separate Anschlagschiene 12 vorgesehen, insgesamt sind also zwei weitere Anschlagschienen 12 vorgesehen. Beide Anschlagschienen 12 sind mit Befestigungsklammern 13 versehen, mit denen sie auf die Werkstückanschlagschiene 10 aufgesteckt bzw.an die Werkstückanschlagschiene 10 angesteckt sind. Im in Fig. 2 dargestellten Ausführungsbeispiel ist in der links erkennbaren Anschlagschiene 12 die als die Werkstückanschlagschiene 10 überfassende Federklammer ausgeführte Befestigungsklammer 13 angedeutet. Erkennbar ist außerdem, daß die Unterbrechung 11 in der Werkstückanschlagschiene 10 auf der Rückseite der Werkstückanschlagschiene 10 von einer bogenförmigen Verbindung 14 umfaßt wird. Diese dient an der Rückseite der Werkstückanschlagschiene 10 gleichzeitig als Begrenzung für die Positionierbarkeit der Anschlagschienen 12. Dadurch ist sichergestellt, daß die Anschlagschienen 12 nicht näher als auf einen bestimmten minimalen Abstand an den Eintauchschlitz 9 herangebracht werden können.

Interessant ist bei dem dargestellten Ausführungsbeispiel, daß die auf die Werkstückanschlagschiene 10 aufgesteckten bzw. an die Werkstückanschlagschiene 10 angesteckten Anschlagschienen 12 gegenüber der Werkstückanschlagschiene 10 seitlich verschiebbar sind.

Fig. 2 macht weiter deutlich, daß die der Unterbrechung 11 zugewandten Enden der Anschlagschienen 12 entsprechend dem maximalen Gehrungsschnittwinkel des Sägeblattes 6 abgeschrägt sind. Schließlich ist in Fig. 2 nur angedeutet, daß die Anschlagschienen 12 aus Aluminium bestehen.

**Patentansprüche**

1. Sägeeinrichtung mit einem Traggestell (1) mit einer eine Werkstückauflagefläche bildenden Grundplatte (2) und einem an der Grundplatte (2) angeordneten Sägeaggregat (3), wobei das Sägeaggregat (3) einen Antriebsmotor (4) und ein auf einer Welle (5) gelagertes, vom Antriebsmotor (4) angetriebenes Sägeblatt (6) aufweist und gegenüber der Grundplatte (2) zumindest um eine parallel zur Welle (5) des Sägeblattes (6) verlaufende Schwenkachse (7) schwenkbar ist, wobei die Grundplatte (2) einen Eintauchschnlitz (9) für das Sägeblatt (6) aufweist, wobei nahe der Schwenkachse (7) eine quer über die Grundplatte (2) verlaufende Werkstückanschlagschiene (10) mit einer Unterbrechung (11) im Bereich des Eintauchschlitzes (9) an der Grundplatte (2) angebracht ist und wobei vor der Werkstückanschlagschiene (10) eine weitere Anschlagschiene (12) liegt, **dadurch gekennzeichnet**, daß die weitere Anschlagschiene (12) mit mindestens einer Befestigungsklammer (13) versehen ist, mit der sie auf die Werkstückanschlagschiene (10) aufgesteckt bzw. an die Werkstückanschlagschiene (10) angesteckt ist.

2. Sägeeinrichtung nach Anspruch 1, dadurch gekennzeichnet, daß die weitere Anschlagschiene (12) den Eintauchschlitz (9) und die Unterbrechung (11) frei läßt.

3. Sägeeinrichtung nach Anspruch 1 oder 2, dadurch gekennzeichnet, daß die auf die Werkstückanschlagschiene (10) aufgesteckte bzw. an die Werkstückanschlagschiene (10) angesteckte Anschlagschiene (12) gegenüber der Werkstückanschlagschiene (10) seitlich verschiebbar ist.

4. Sägeeinrichtung nach einem der Ansprüche 1 bis 3, dadurch gekennzeichnet, daß das der Unterbrechung (11) zugewandte Ende der Anschlagschiene (12) entsprechend dem maximalen Gehrungsschnittwinkel des Sägeblattes (6) abgeschrägt ist.

5. Sägeeinrichtung nach einem der Ansprüche 1 bis 4, dadurch gekennzeichnet, daß die Anschlagschiene (12) aus Aluminium besteht.

6. Sägeeinrichtung nach einem der Ansprüche 1 bis 5, dadurch gekennzeichnet, daß auf jeder Seite der Unterbrechung (11) eine separate Anschlagschiene (12) vorgesehen ist, insgesamt also zwei weitere Anschlagschienen (12) vorgesehen sind.

Fig.1

Fig. 2